# FASCICULE DE BREVET EUROPEEN

(11) **EP 0 863 830 B1**
(45) Date de publication et mention de la délivrance du brevet: **27.10.1999**
(21) Numéro de dépôt: 96943159.2
(22) Date de dépôt: 20.12.1996
(51) Int. Cl.: B62J 6/00, E05B 45/00

(54) **DISPOSITIF D'ECLAIRAGE OU DE SIGNALISATION LUMINEUSE, NOTAMMENT POUR DEUX-ROUES**
BELEUCHTUNG UND SIGNALISIERUNG EINES FAHRRADES
ILLUMINATING OR LIGHT SIGNALLING DEVICE, PARTICULARLY FOR BICYCLES AND THE LIKE

(30) Priorité: 21.12.1995 FR 9515247
(43) Date de publication de la demande: 16.09.1998
(73) Titulaire: Charles, Kim, 75006 Paris (FR)
(72) Inventeur: CHARLES, Kim, F-75006 Paris (FR); CHOIMET, Henri, F-75017 Paris (FR)
(74) Mandataire: Joly, Jean-Jacques
(86) Numéro de dépôt international: FR9602043
(87) Numéro de publication internationale: WO9723379

(56) Documents cités:
- GB-A- 2 241 775
- US-A- 4 546 345
- PATENT ABSTRACTS OF JAPAN vol. 95, no. 008 & JP 07 208011 A (SEKISUI CHEM CO LTD), 8 Août 1995,
- PATENT ABSTRACTS OF JAPAN vol. 95, no. 009 & JP 07 232677 A (SEKISUI CHEM CO LTD), 5 Septembre 1995,

## Description

La présente invention concerne un dispositif d'éclairage ou de signalisation lumineuse, notamment pour deux-roues, auto-protégé contre le vol.

Des dispositifs d'éclairage ou de signalisation destinés à être fixés sur le cadre d'une bicyclette sont bien connus de l'art antérieur. Ces dispositifs peuvent être rapidement montés sur tout type de deux-roues. Ils permettent d'utiliser la nuit ou en milieu urbain des deux-roues dépourvus de système d'éclairage d'origine, tels que de nombreux modèles de VTT ou de bicyclettes de course, ou de palier une éventuelle défaillance du système d'éclairage d'origine.

Ces dispositifs d'éclairage ou de signalisation sont généralement alimentés par une batterie rechargeable ou des piles. Ils présentent l'avantage, par rapport aux systèmes d'éclairage ou de signalisation classiques alimentés par une dynamo, de rester allumés quand le deux-roues est à l'arrêt et d'éclairer avec une intensité constante quelle que soit la vitesse d'avancement du deux-roues.

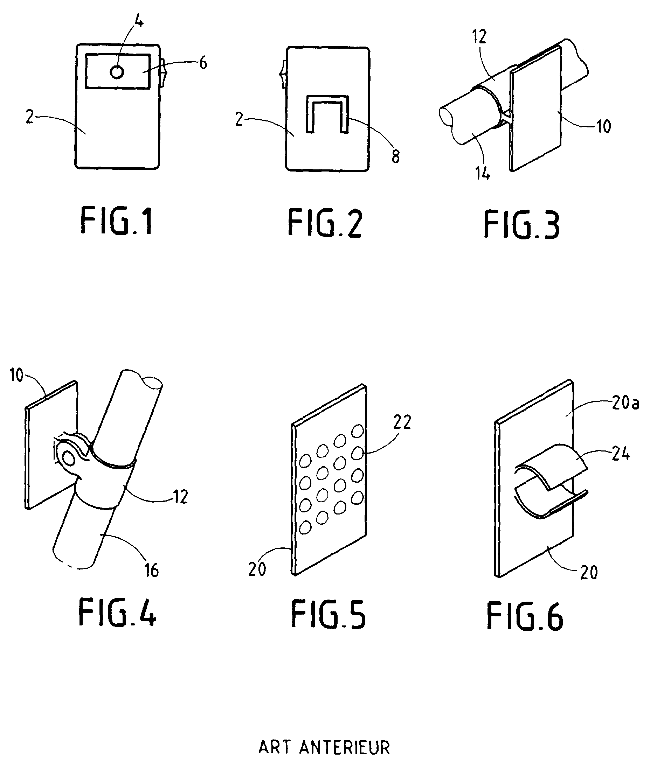

Un premier mode de réalisation d'un tel système d'éclairage ou de signalisation amovible de l'art antérieur est maintenant décrit en combinaison avec les figures 1 à 4. Ce système d'éclairage ou de signalisation se compose d'un boîtier 2 représenté de face sur la figure 1 et de dos sur la figure 2. Dans un mode de réalisation particulier, ce boîtier 2 renferme une pile, mais il peut également renfermer une batterie d'accumulateurs rechargeable. Il abrite une ampoule d'éclairage 4 disposée derrière une vitre 6 incolore ou de couleur rouge, selon que le boîtier 2 est destiné à être monté à l'avant ou à l'arrière du deux-roues. Une glissière 8 est fixée au dos de ce boîtier. La glissière 8 est destinée à s'engager sur un socle 10 porté par une bague 12 montée sur le guidon 14 ou le cadre 16 du deux-roues.

La figure 3 montre un ensemble bague-socle 12, 10 plus particulièrement destiné à être monté sur le guidon 14 d'une bicyclette, tandis que la figure 4 montre un ensemble bague-socle 12, 10 où la position du socle est orientable, plus particulièrement destiné à être monté sur la fourche arrière 16 d'une bicyclette. La glissière 8 du boîtier 2 est insérée en force dans le socle 10, de telle manière que l'assemblage résiste aux trépidations se produisant quand la bicyclette est en mouvement, tout en permettant une introduction et un retrait aisés de la glissière vis-à-vis du socle.

Les figures 5 et 6 montrent un deuxième exemple d'un dispositif d'éclairage ou de signalisation amovible de l'art antérieur. Il est constitué d'un boitier 20 portant sur sa face avant un réseau de diodes électroluminescentes 22 (LEDs), le plus souvent de couleur rouge ou vert tirant vers le blanc, pouvant, dans certains modes de réalisation, clignoter. Le boitier 20 abrite un circuit de commande des LEDs et une ou plusieurs piles (non représentés). Il porte sur sa face arrière 20a un collier élastique 24 permettant de fixer le boîtier 20 au guidon ou au cadre d'une bicyclette.

Le document JP-A-07208011 décrit un dispositif d'éclairage ou de signalisation lumineuse comprenant des moyens de sûreté verrouillables au véhicule et solidaires de moyens d'éclairage ou de signalisation lumineuse.

L'inconvénient de ces dispositifs d'éclairage ou de signalisation est qu'ils peuvent être aisément dérobés si on les laisse sur le deux-roues. L'utilisateur qui quitte son deux-roues est donc contraint d'emporter avec lui les boîtiers, ce qui constitue une entrave à sa liberté de mouvement, vu la taille et le poids non négligeables de ces boîtiers.

L'objet de la présente invention est de s'affranchir de l'inconvénient des dispositifs d'éclairage ou de signalisation de l'art antérieur en proposant un dispositif d'éclairage ou de signalisation lumineuse destiné à équiper un véhicule, notamment un deux-roues, comprenant des moyens de sûreté verrouillables au véhicule, et solidaires de moyens d'éclairage ou de signalisation lumineuse, caractérisé en ce qu'il comprend une source de signalisation lumineuse avant et une source de signalisation lumineuse arrière, les moyens de sûreté permettant en outre de réaliser une fonction anti-vol pour ledit véhicule en comprenant une liaison mécanique entre lesdites sources de signalisation lumineuse avant et arrière, et des moyens de jonction et de verrouillage desdites sources de signalisation lumineuse l'une avec l'autre.

Ces moyens permettent notamment de bénéficier de la souplesse d'utilisation de dispositifs d'éclairage amovibles sans le problème de sûreté qui nécessite normalement de retirer les dispositifs d'éclairage lorsque le véhicule n'est pas gardé. Qui plus est, le dispositif de l'invention permet également de protéger le véhicule en l'immobilisant. Ainsi, on obtient de manière remarquable la double fonction de protéger contre le vol à la fois les moyens d'éclairage et le véhicule lui-même, réunis en un seul dispositif.

Avantageusement, les moyens de sûreté comprennent un élément de forme allongée pouvant former une boucle verrouillable autour d'au moins une partie du véhicule.

De préférence, les moyens d'éclairage ou de signalisation lumineuse avant et arrière sont logés dans des boîtiers respectifs à chaque extrémité de la liaison mécanique.

Selon un mode de réalisation préféré de l'invention les moyens d'éclairage comprennent une source de signalisation lumineuse avant et une source de sûreté comprenant une liaison mécanique entre lesdits boîtiers et des moyens de jonction et de verrouillage des boîtiers l'un avec l'autre.

Cette disposition de deux boîtiers séparés permet de placer l'éclairage avant et arrière aux endroits les plus propices, par exemple sur le guidon et sous la selle ou à un poste de fixation sur une fourche arrière dans le cas d'une bicyclette, tout en bénéficiant d'une structure unitaire grâce à la liaison mécanique. Cette dernière peut être réalisée sous forme de câble ou de ruban en acier à ressorts dont la longueur, suffisante pour permettre de placer les boîtiers en configuration d'éclairage, autorise un bouclage aisé autour du cadre et l'une des roues du véhicule, éventuellement en encerclant aussi un organe fixe tel qu'un poteau ou une barrière.

De préférence, la liaison mécanique est sous forme de câble préformé de façon à adopter naturellement une configuration en spirale. Ceci permet notamment de faire tenir le câble autour de la barre horizontale du cadre d'une bicyclette en faisant passer le boîtier avant quelques fois autour de cette barre avant de le positionner.

Selon un mode de réalisation de l'invention, les boîtiers avant et arrière présentent chacun une face dotée d'une fenêtre de sortie pour la source lumineuse et deux extrémités opposées, l'une solidaire à une extrémité de la liaison mécanique et l'autre intégrant les moyens de jonction des boîtiers l'un avec l'autre.

Selon un autre mode de réalisation, pour chacun des deux boîtiers, la fenêtre de sortie pour la source de signalisation lumineuse de l'un des boîtiers est protégée par l'autre boîtier lorsque le dispositif est en configuration de verrouillage.

De préférence, les moyens de jonctions comprennent au moins un élément mâle et une prise femelle complémentaires formés sur les boîtiers respectifs, le dispositif comprenant en outre des socles de fixation des boîtiers respectifs sur le véhicule permettant la fixation des boîtiers en configuration de signalisation lumineuse respectivement par l'élément mâle et la prise femelle.

Selon une mise en oeuvre avantageuse de l'invention, un câblage électrique est associé avec la liaison mécanique reliant les boîtiers entre eux. Ce câblage peut être intégré sous une gaine protectrice de la liaison mécanique.

Cette disposition permet notamment d'utiliser une seule source d'énergie logée dans un premier des boîtiers, de préférence le boîtier arrière, l'alimentation du second des boîtiers étant assurée par le câblage électrique.

Ainsi, il est possible de prévoir, au niveau du second boitier, des moyens de connexion à une source extérieure de courant électrique permettant de recharger la source d'énergie électrique du premier boîtier via le câblage électrique.

Il est également possible de prévoir en outre des moyens de signalisation d'intention de changement de direction activés par un commutateur à l'avant du véhicule et reliés au boîtier arrière par le câblage électrique.

Le commutateur peut être câblé à un dispositif d'interface qui se connecte électriquement avec le boîtier avant lorsque celui-ci est monté en position de signalisation lumineuse.

Le boîtier avant peut également comprendre des moyens pour déterminer et afficher des informations concernant le déplacement du véhicule.

Afin d'éviter tout risque de décharge inutile de la batterie, le dispositif peut comprendre en outre des moyens de commutation permettant d'inhiber au moins la signalisation lumineuse lorsque le dispositif est en configuration de verrouillage.

Pour une sûreté plus accrue, le dispositif peut également comprendre une alarme d'effraction adaptée pour se déclencher en réponse à l'une ou plusieurs des conditions suivantes : mouvement ou force subis par le dispositif et rupture des moyens de sûreté.

Il est également possible d'équiper le dispositif d'un avertisseur sonore et/ou de moyens de conversion d'énergie, ces derniers étant associés à la roue avant ou arrière, ou au pédalier du véhicule, et permettant de recharger la source d'énergie électrique.

D'autres avantages et caractéristiques de l'invention ressortiront à la lecture d'un mode de réalisation préféré, présenté uniquement à titre d'exemple, en référence aux dessins en annexe dans lesquels :
La figure 1 est une vue de face d'un boîtier d'éclairage selon l'art antérieur;
la figure 2 est une vue de dos d'un boîtier d'éclairage selon l'art antérieur ;
la figure 3 est une vue en perpective d'une pièce coopérant avec le boîtier d'éclairage des figures 1 et 2 pour monter ce boitier sur le guidon d'un deux-roues;
la figure 4 est une vue en perspective d'une pièce coopérant avec le boîtier d'éclairage des figures 1 et 2 pour monter ce boîtier sur la fourche arrière d'un deux-roues ;
la figure 5 est une vue de trois quarts de la face avant d'un autre dispositif d'éclairage selon l'art antérieur ;
la figure 6 est une vue de trois quarts de la face arrière du dispositif d'éclairage de la figure 5 ;
la figure 7 est une vue du dispositif d'éclairage selon un premier mode de réalisation de l'invention en position d'éclairage sur un deux-roues ;

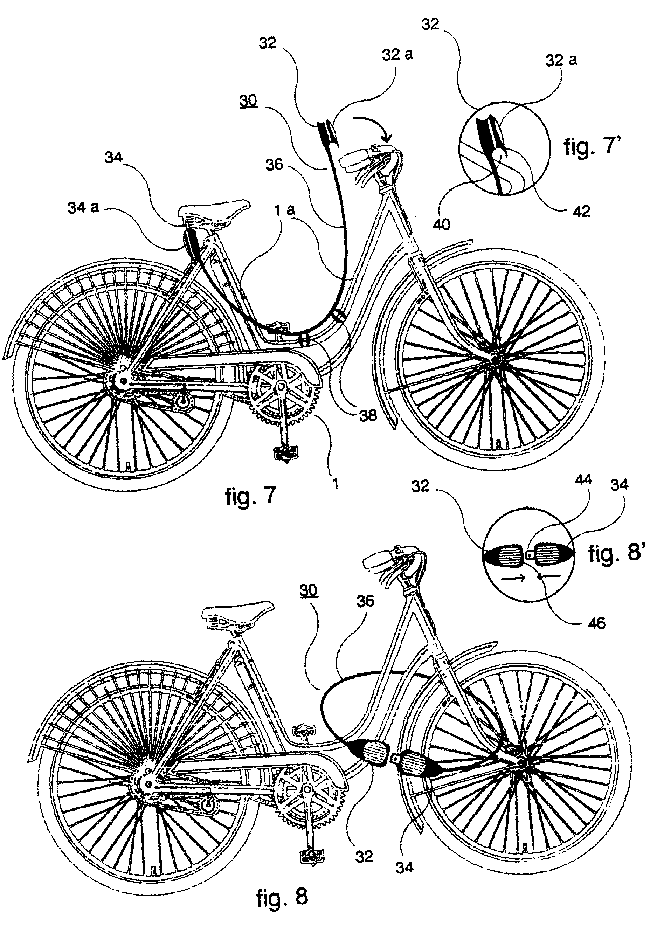

la figure 7' est une loupe de la figure 7 montrant un détail du boîtier avant du dispositif d'éclairage ;
la figure 8 est une vue d'un dispositif d'éclairage selon le premier mode de réalisation en position antivol sur un deux-roues ;
la figure 8' est une loupe de la figure 8 montrant la jonction des boîtiers avant et arrière du dispositif d'éclairage ;

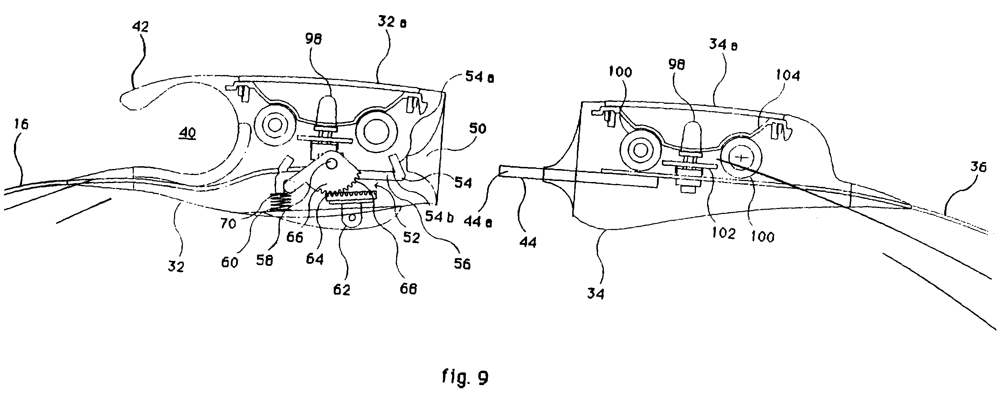

la figure 9 est une coupe transversale des boîtiers avant et arrière du dispositif d'éclairage selon le premier mode de réalisation ;

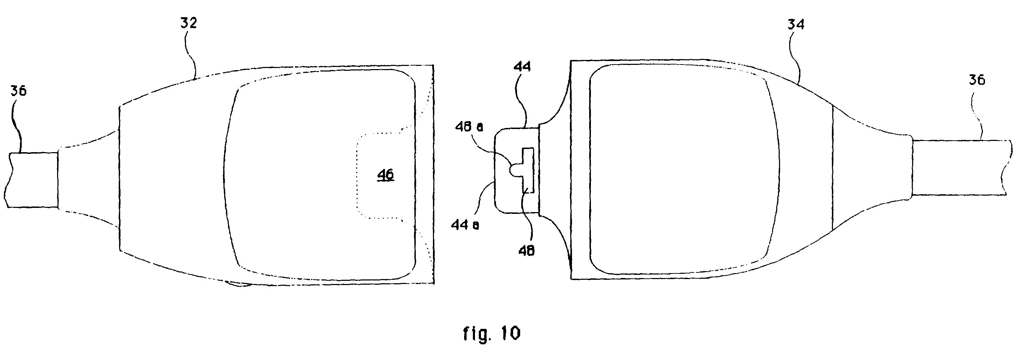

la figure 10 est une vue simplifiée en plan du boîtier avant du dispositif d'éclairage selon le premier mode de réalisation ;

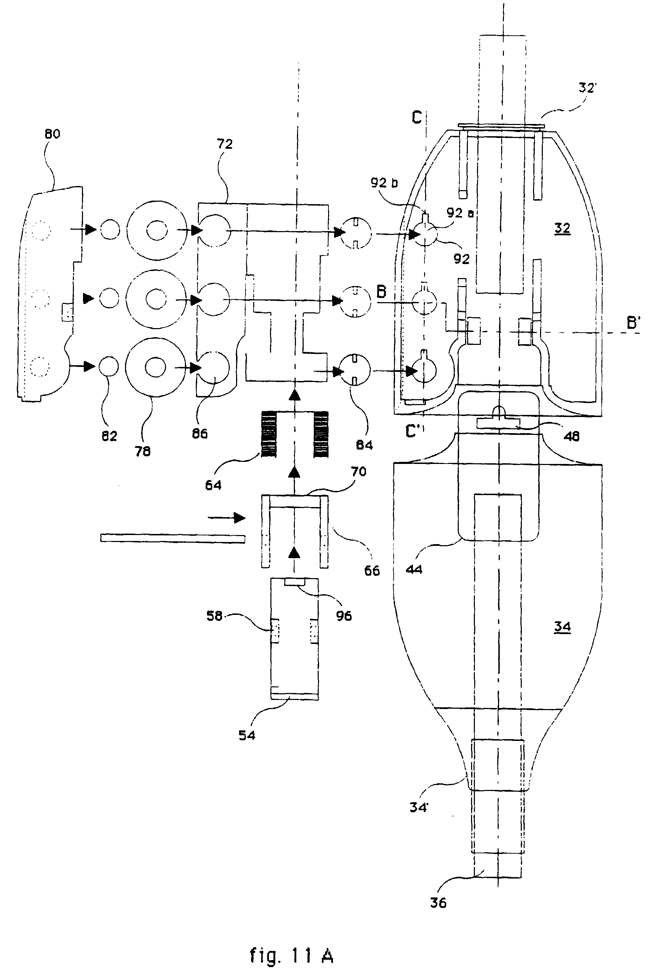

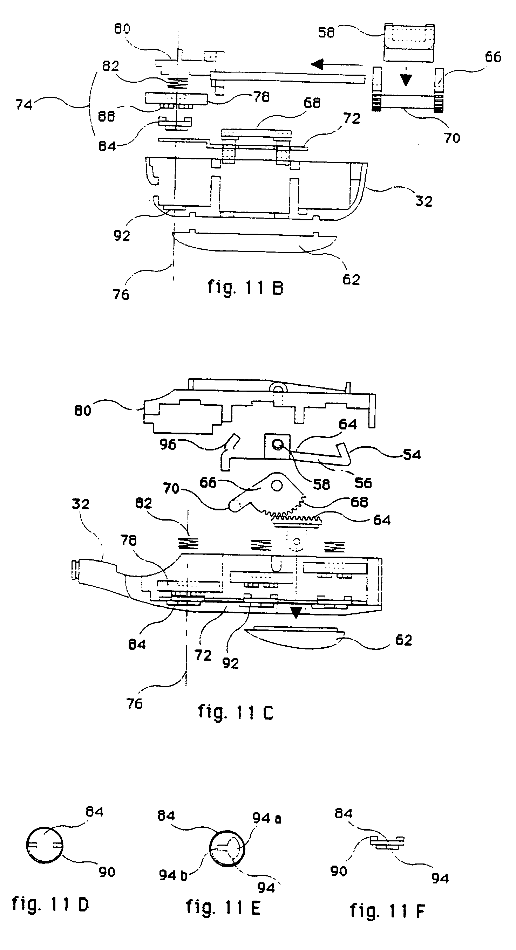

la figure 11A est une vue éclatée de face du boîtier avant du dispositif d'éclairage selon le premier mode de réalisation ;
la figure 11B est une vue éclatée à travers l'axe B-B' de la figure 11A du boîtier avant du dispositif d'éclairage selon le premier mode de réalisation;
la figure 11C est une vue éclatée à travers l'axe C-C' de la figure 11A du boîtier avant du dispositif d'éclairage selon le premier mode de réalisation ;
la figure 11D est une vue détaillée d'une pièce profilée formant partie des moyens de verrouillage du mode de réalisation de l'invention représenté en plan sur une première face ; et
la figure 11E est une vue détaillée de la pièce profilée de la figure 11D montrant une deuxième face de celle-ci, opposée à la première ;
la figure 11F est une vue détaillée de la pièce profilée de la figure 11D, vue du profil ;

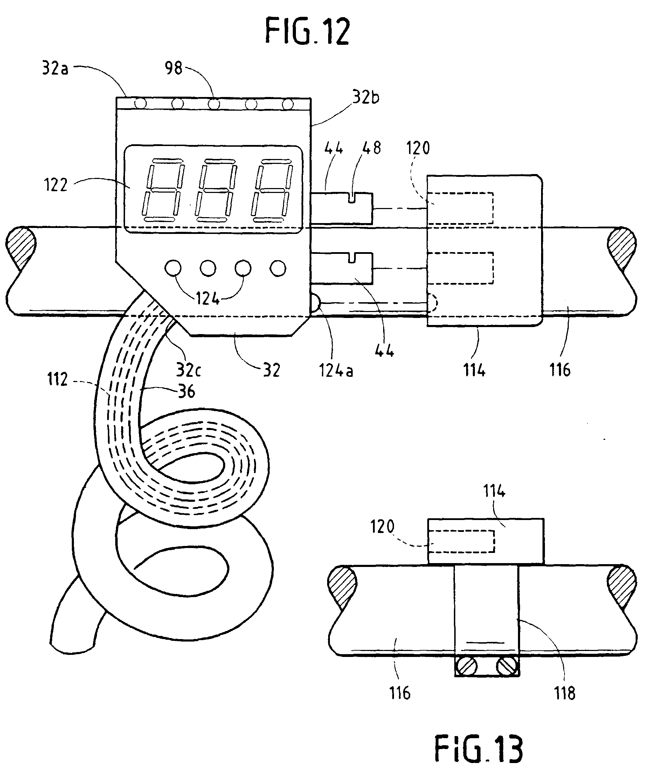

la figure 12 est une vue en plan du boîtier avant du dispositif selon un deuxième mode de réalisation ;
la figure 13 est une vue de côté d'un socle représenté à la figure 12 ;

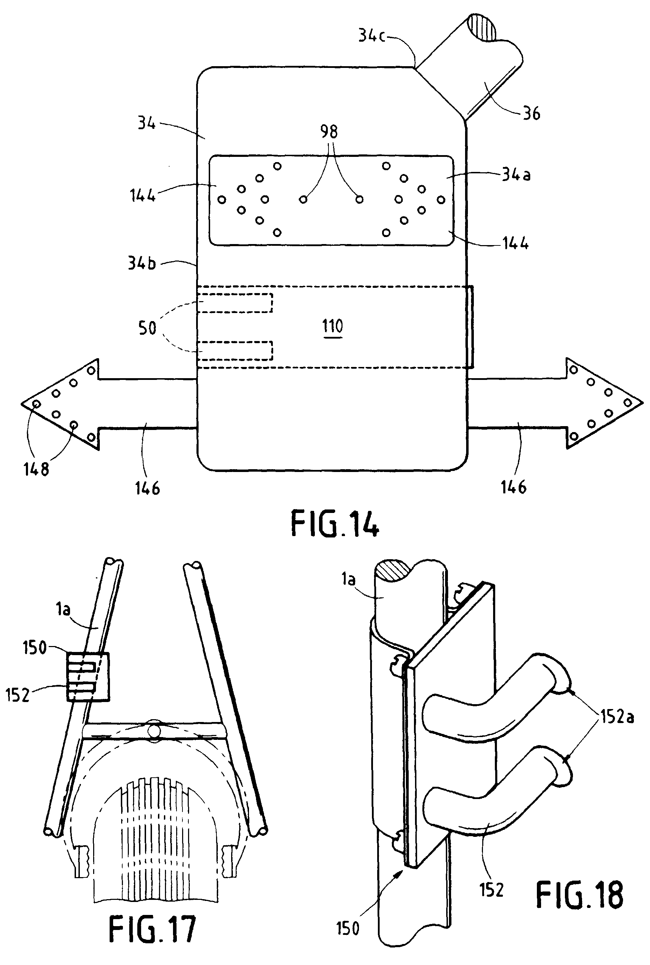

la figure 14 est une vue de face du boîtier arrière du dispositif selon le deuxième mode de réalisation;

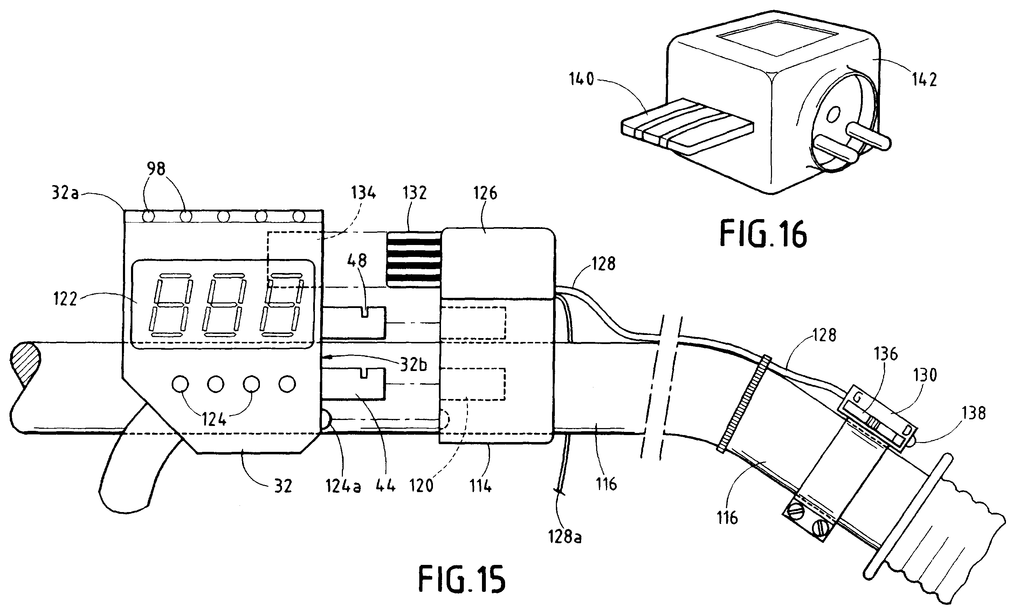

la figure 15 est une vue en plan du boîtier avant du dispositif du deuxième mode de réalisation avec un équipement d'interface ;
la figure 16 est une vue de trois quart d'une source d'alimentation externe destinée au boîtier avant du dispositif selon le deuxième mode de réalisation ;

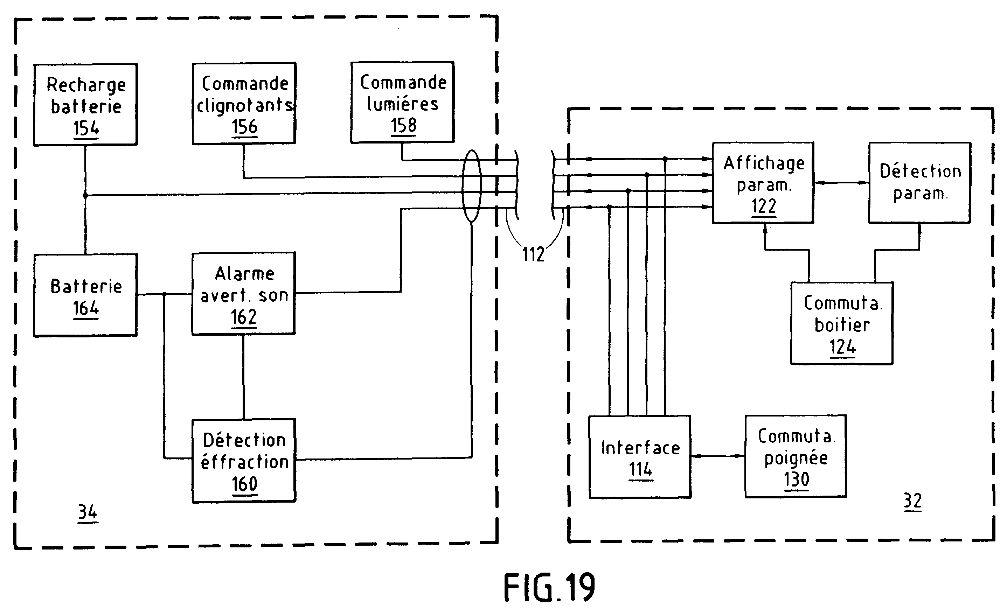

la figure 17 est une vue simplifiée d'un socle de fixation du boîtier arrière du dispositif selon le deuxième mode de réalisation ;
la figure 18 est une vue de trois quarts du socle de fixation de la figure 17 ;
la figure 19 est un schéma bloc montrant les fonctions électriques et électroniques du dispositif selon le deuxième mode de réalisation ;

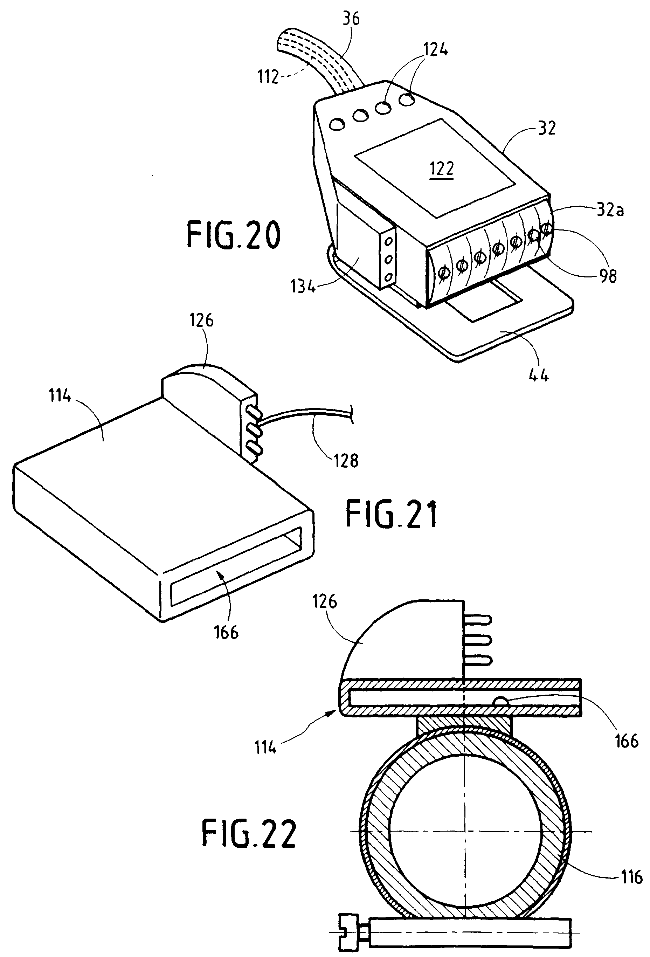

la figure 20 est une vue de trois quarts du boîtier avant du dispositif selon un troisième mode de réalisation de l'invention;
la figure 21 est une vue de trois quarts d'un socle avec une interface électrique, adaptés pour recevoir le boîtier avant de la figure 20 ;
la figure 22 est une vue transversale simplifiée du socle de la figure 21 ; et

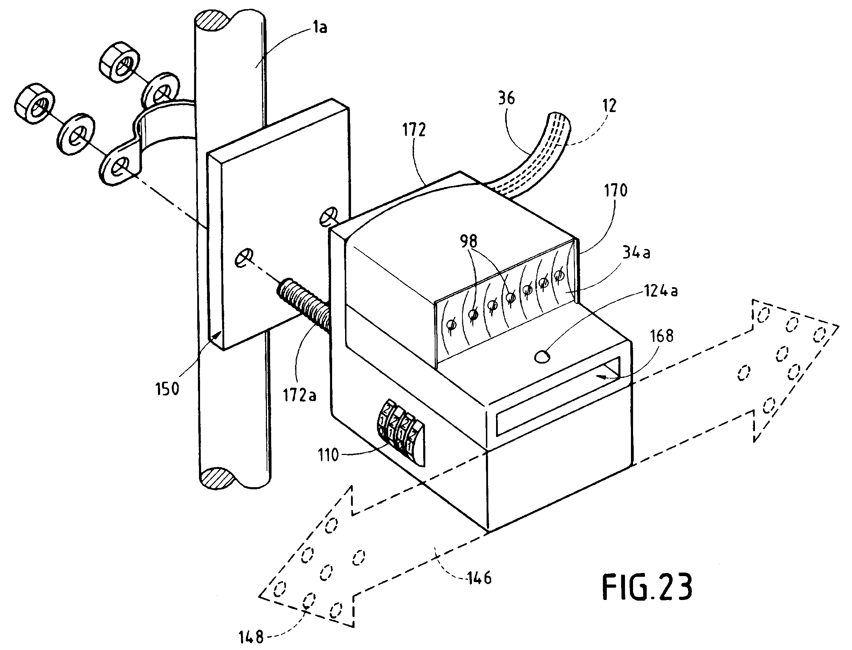

la figure 23 est une vue de trois quarts du boîtier arrière du dispositif selon le troisième mode de réalisation et d'un socle de fixation pour ce dernier.

Il sera maintenant décrit un premier mode de réalisation de l'invention par référence aux figures 7 à 11F.

La figure 7 est une représentation générale d'un dispositif d'éclairage et de signalisation selon l'invention, monté en position d'éclairage sur une bicyclette 1. Ce dispositif comprend deux boîtiers 32, 34 incorporant une source lumineuse associée à une optique (non représentée) et une fenêtre de sortie 32a, 34a permettant de remplir les fonctions de signalisation avant et arrière. Les boîtiers 32, 34 sont reliés par un ruban 36 en acier à ressorts, résistant au cisaillement. Le ruban 36 a une longueur suffisante pour que le boîtier avant 32 puisse être placé sur le guidon et le boîtier arrière 34 accroché sous la selle de la bicyclette. Dans le mode de réalisation de la figure 7, la bicyclette a un cadre femme et le ruban 36 court sensiblement au voisinage de la partie la du cadre en forme de V, afin de ne pas gêner l'utilisateur quand il monte sur la bicyclette ou en descend. Le dispositif d'éclairage coopère avec des éléments 38 de guidage du ruban 36 s'adaptant sur le cadre de la bicyclette afin d'éviter qu'un déplacement éventuel du ruban ne gêne le cycliste. Un tel élément de guidage peut prendre, par exemple, la forme d'un assemblage de plusieurs anneaux ouverts, l'un s'adaptant sur le cadre et l'autre recevant le ruban 36.

Le boîtier avant 32 présente une surface concave formant une gorge 40 (figure 7') ayant à son ouverture un élément élastique 42 permettant de retenir le guidon dans la gorge. Le poids de la liaison mécanique agit sur le boîtier avant de façon à maintenir la gorge en butée contre la portion de guidon.

Le boîtier arrière 34 est fixé sous la selle au moyen d'un crochet au niveau du boîtier qui coopère avec un ergot dépendant du cadre de la selle.

Le dispositif est ainsi maintenu sur le véhicule- une bicyclette en l'occurrence - de manière aisément amovible lorsqu'il est en configuration de signalisation lumineuse.

Comme le montre la figure 8, lorsque le dispositif d'éclairage est en configuration de sûreté, les boîtiers avant et arrière 32, 34 sont solidarisés par des moyens de verrouillage mâle 44 et femelle 46 intégrés respectivement aux boîtiers arrière et avant (figure 8'). Le ruban 36 forme alors une boucle qui est suffisamment longue pour entourer la bicyclette 1, par exemple la roue avant et une portion de cadre, et éventuellement un point d'attache fixe, tel qu'un poteau ou une clôture.

Dans l'exemple, le ruban 36 est réalisé en acier à ressorts ayant une largeur d'environ 12 mm et une épaisseur d'environ 2 mm. Il est recouvert d'une couche plastifiante qui protège le métal et rend les bords moins coupants. De préférence, la couche plastifiante est fluorescente, soit intégralement, soit sur des motifs.

Les figures 9 et 10 représentent de façon détaillée le dispositif de jonction des boîtiers 32, 34.

L'élément de verrouillage mâle comprend une lame 44 contenant une découpe 48 (montrée dans la vue de face des boîtiers de la figure 10) qui fait saillie du boîtier arrière 34 du côté opposé à celui d'où sort le ruban 36. L'élément de verrouillage femelle comprend une ouverture 50, destinée à recevoir et à guider la lame 44, et des moyens d'encliquetage 52 destinés à retenir la lame.

Les moyens d'encliquetage 52 comprennent un crochet 54 monté pivotant à l'intérieur de l'ouverture 50, destiné à coopérer avec la découpe 48 de la lame 44. Le crochet 54 est formé à l'extrémité d'un élément 56 articulé autour d'un axe de pivotement 58. Cet élément articulé 56 est sollicité par un ressort 60 de telle manière que le crochet 54 soit normalement maintenu à une position d'encliquetage. Le crochet 54 présente, vu de l'ouverture 50, une surface extérieure 54a inclinée de façon à pivoter contre l'effet du ressort 60 lorsque le bord antérieur 44a de la lame y vient en butée lors de l'engagement de boîtiers 32, 34. Le crochet 54 glisse alors le long de la face de la lame 44 et se relève sous l'action du ressort 60 lorsqu'il se trouve au niveau de la découpe 48. La lame 44 est ainsi retenue en butée contre la surface intérieure 54b du crochet 54 par le bord antérieur de l'ouverture (figure 10).

Un mécanisme de désengagement manuel des moyens d'encliquetage est constitué par une glissière 62 qui présente une face accessible à l'extérieur du boîtier avant 32 et permet de faire pivoter le crochet 54 contre le sens de sollicitation par le ressort 60. La glissière 62 comporte deux chemins à crémaillère parallèles 64 (un seul est représenté à la figure 9) qui coopèrent avec une pièce 66 comportant une paire de segments crantés 68 montés sur le même axe 58 que l'élément articulé 56. Une barre 70, dépendant de la pièce précitée 66, prend appui contre une portion de surface de l'élément articulé à l'extrémité opposée à celle du crochet 54. Le déplacement en translation de la glissière 62 déplace, via la crémaillère 64, la barre 70 contre l'élément articulé 56 pour faire pivoter ce dernier dans le sens du retrait du crochet 54 de l'ouverture 48 de la lame 44.

On notera que l'ouverture de la lame peut être utilisée pour accrocher le boîtier sur la bicyclette en configuration d'éclairage, par exemple au moyen d'un ergot dépendant de la selle ou d'une fourche arrière de cadre.

Le mécanisme de verrouillage est maintenant décrit par référence aux figures 11A à 11F.

Le verrouillage est réalisé en bloquant la possibilité de translation de la glissière 62 au moyen d'une serrure à combinaison. Celle-ci est représentée dans une vue éclatée à la figure 11A, en coupe à travers l'axe B-B' de la figure 11A à la figure 11B, et en coupe à travers l'axe C-C' de la figure 11A à la figure 11C.

La serrure comprend une plaque coulissante profilée 72, solidaire de la glissière 62, et un jeu de trois dispositifs à molette 74 traversant la plaque coulissante (figure 11B). Chaque dispositif à molette 74 est réalisé en deux parties montées sur un axe commun de rotation 76. L'une des parties comprend une molette 78 autorisant l'accès aux combinaisons, retenue sur un palier 80 dépendant du boîtier avant 32 via un ressort de précontrainte 82. L'autre partie comprend une pièce profilée 84 retenue dans la plaque coulissante 72 et traversant cette dernière. La pièce profilée 84 est représentée de façon détaillée aux figures 11D à 11F sur ses deux faces opposées et de côté.

Les faces en regard de la molette 78 et de la pièce profilée 84 (cette dernière étant représentée à la figure 11D) présentent respectivement des logements 88 et des portions relevées 90 complémentaires permettant de solidariser la molette et la pièce profilée sous l'action du ressort de précontrainte 82.

La face de la pièce profilée tournée vers le fond du boîtier avant 32 à différentes positions angulaires de la molette 78, correspondant à des réglages possibles de la combinaison, est logée dans un creux 92 de ce dernier faisant office de palier. Ce creux 92 présente une partie circulaire 92a permettant de maintenir et de guider la pièce profilée 84 et une cannelure contiguë 92b (figure 11A). Cette cannelure 92b est alignée dans l'axe de translation de la pièce coulissante 72 (flèche F, figure 11A).

La face 84a de la pièce profilée tournée vers le fond du boîtier 32 a une portion relevée 94 comprenant une partie de forme arrondie 94a permettant le guidage de la pièce dans le creux et une partie contiguë de forme allongée 94b pouvant être reçue dans la cannelure 92b sensiblement sans jeu.

Lorsque la molette 78 et la pièce profilée 84 sont engagées, il devient possible, par rotation de la molette, d'aligner la partie relevée de forme allongée 94b avec la cannelure 92b.

Lorsque cette configuration est obtenue avec les trois dispositifs à molette 74, la plaque coulissante 72 peut être translatée le long du boîtier 32, les parties relevées de forme allongée 94b s'introduisant alors dans les cannelures 92b respectives. L'amplitude de cette translation, définie par le cannelures 92b, est suffisante pour permettre le basculement de l'élément articulé 64 et ainsi de dégager le crochet 54 de l'ouverture 48 de la lame 44.

En revanche, si l'alignement des parties relevées allongées 94b, par rapport à leurs cannelures respectives 92b, n'est pas réalisé pour les trois dispositifs à molette 74, la translation de la pièce coulissante 72 est empêchée par la venue en butée de la ou des extrémités de la ou des parties relevées allongées contre les portions de paroi délimitant le creux 92 du fond du boîtier 32.

La combinaison des dispositifs à molette 74 permettant la séparation des deux boîtiers 32, 34 est identifiable par des repères visibles sur le pourtour des molettes 78 (non représentées). Cette combinaison peut être programmée mécaniquement en composant la combinaison existante et en maintenant la glissière 62 déplacée en position de dégagement du crochet 54. Dans cette configuration, les axes respectifs de la molette 78 et de la pièce profilée 84 sont décalés. Il suffit alors, pour chaque dispositif à molette 74, de tourner la molette 78 librement jusqu'à un indice choisi et de remettre la glissière 62 à sa position de jonction normale. A cette fin, l'interface entre la molette 78 et la pièce profilée 84 comporte des crantages complémentaires indexés aux repères.

Les extrémités du ruban 36 pénètrent dans les boîtiers 32, 34 au niveau de bords de sortie 32', 34'. Chacun des deux bords de sortie 32', 34' est situé à l'opposé du bord présentant les moyens de jonction précités.

L'extrémité du ruban 36 rattachée au boîtier avant 32 est scellée à l'élément articulé 64. Dans l'exemple représenté sur le dessin, le ruban est fixé à l'extrémité de retenue de cet élément 64 qui est opposée à celle formant le crochet d'encliquetage 54. Un crochet 96 solidaire de l'extrémité de retenue traverse une ouverture fournie dans le ruban 36 et retient celui-ci de manière permanente. Le ruban 36 est également maintenu serré au niveau du bord de sortie 32' du boîtier avant. Ce bord de sortie 32' est situé en aval par rapport au fond de la gorge 40 formant le moyen de fixation du boîtier 32 au guidon (figure 9). De la sorte, le poids du ruban 36 qui pend à partir de ce bord de sortie 32' crée un état d'équilibre stable pour le maintien en place du boîtier 32 sur le guidon.

L'extrémité du ruban 36 rattachée au boîtier arrière 34 peut être fixée par brasage sur la lame 44. Elle peut également être rivetée à celle-ci, ou autrement fixée à tout point solide du boîtier.

Un système conventionnel d'éclairage comportant une source lumineuse 98, un jeu de piles 100, un circuit électrique 102, une pièce réfléchissante 104 et une fenêtre à catadioptres 32a ou 34a est intégré dans chacun des boîtiers avant et arrière 32, 34.

A titre d'exemple, la source lumineuse est constituée par une ou plusieurs diodes électroluminescentes (LEDs) 98 montée(s) directement sur le circuit 102, lequel se présente sous la forme d'une carte de faibles dimensions. Le carte 102 comprend un socle pour les piles 100, des circuits électroniques de commande permettant les réglages de l'intensité lumineuse et des configurations de clignotement des LEDs 98. La commande marche/arrêt et les réglage précités sont accessibles par des boutons (non représentés) au dos du boîtier.

Les parties optiques 32a ou 34a, 104, ainsi que la source lumineuse 98, sont choisies pour fournir une lueur (blanche pour l'avant, rouge pour l'arrière) conforme aux normes et aux législations en vigueur.

Un bon compromis entre la sûreté, la légèreté et le prix de revient du dispositif peut être obtenu en réalisant les boîtiers sous la forme de coques en matière plastique moulée. Pour une sûreté accrue, il est également possible d'utiliser comme matériau des composites carbone, des pièces en alliage, voire de l'acier à haute résistance mécanique.

Il sera maintenant décrit un deuxième et un troisième modes de réalisation de l'invention par référence aux figures 12 à 19 et 20 à 23, respectivement. Pour faciliter la compréhension les éléments de ces modes de réalisation ayant des fonctions analogues à ceux décrits dans le premier mode de réalisation portent les mêmes références aux figures.

Dans le deuxième mode de réalisation, chacun des boîtiers avant 32 et arrière 34 (respectivement illustrés aux figures 12 et 14) comporte des moyens de jonctions 44, 50 sur un côté 32b, 34b qui est perpendiculaire à la fenêtre de sortie 32a, 34a de leur source de signalisation lumineuse 98. Dans l'exemple, les moyens de jonction du boîtier avant comprennent deux broches parallèles 44 comportant des encoches 48. Les moyens de jonction du boîtier arrière 34 comprennent deux trous 50 destinés à loger les broches 44. Le boîtier arrière 34 incorpore une serrure à clef 110 (montrée en pointillés) permettant de verrouiller les broches 44 dans la configuration de sûreté du dispositif.

Chaque boîtier 32, 34 reçoit, au niveau d'un coin 32e, 34e, une extrémité respective d'un câble 36 constituant la liaison mécanique. Comme le montre la figure 12, le câble 36 est préformé de façon à adopter naturellement une configuration en spirale. Ceci permet de faire tenir le câble 36 autour de la barre horizontale du cadre d'une bicyclette 1 en faisant passer le boîtier avant 32 quelques fois autour de cette barre avant de le positionner sur son socle 114.

Le câble 36 intègre un câblage électrique 112 reliant les deux boîtiers 32, 34. Le câblage électrique 112 sert à véhiculer du courant d'un boîtier à l'autre, ce qui permet de prévoir une source d'énergie électrique dans seulement l'un des boîtiers (le boîtier arrière 34, par exemple). Par ailleurs, le câblage 112 comprend des fils de liaison de commande permettant de doter le dispositif de fonctions additionnelles, comme il sera expliqué plus loin.

Avantageusement, le câblage électrique est intégré à la torsion mécanique, par exemple en étant sous une couche ou une gaine de protection de celle-ci.

En position de signalisation lumineuse, le boîtier avant 32 se loge sur un socle 114 qui est monté sur le guidon 116 par un anneau de fixation 118 (figure 13). Le socle 114 comprend deux trous 120 qui peuvent recevoir les broches 44 et les maintenir fermement par des moyens d'encliquetage (non représentés).

Le boîtier avant 32 comprend en outre un écran d'affichage 122 destiné à la visualisation de divers paramètres de fonctionnement du dispositif, tels que l'état de la source d'énergie électrique et le mode de signalisation. Dans l'exemple, le boîtier avant 32 intègre également des moyens de contrôle (non représentés) pour déterminer des informations concernant le déplacement de la bicyclette, tel que la distance parcourue, la vitesse, etc., ainsi que l'heure et la température, et les présenter sur le dispositif d'affichage 122.

Le boîtier avant 32 comprend également des boutons de commutation 24 permettant d'activer diverses commandes relatives aux fonctions des moyens de contrôle ainsi que la mise en marche des sources lumineuses 98 avant et arrière, grâce au câblage électrique 112.

Le boîtier avant 32 comprend aussi un commutateur principal sous forme de bouton pressoir 124a qui inhibe la mise en fonctionnement des sources lumineuses avant et arrière 98 ainsi que les autres fonctions précitées, lorsqu'il est en position enfoncée. Le bouton 124a est placé de manière à être enfoncé lorsque les boîtiers avant et arrière 32 et 34 sont en position de jonction, permettant ainsi d'éviter des pertes d'énergie si les boutons de commande 124 se trouvaient alors dans l'état activé. Lorsque le boîtier avant 32 est sur son socle 114, un dégagement dans ce dernier permet de maintenir le bouton 124a inactivé.

La figure 15 montre l'ensemble comprenant le boîtier avant 32 et le socle 114 auquel est ajouté un dispositif d'interface 126. Le dispositif d'interface 126 se fixe de manière amovible sur le socle 114, et assure une liaison électrique par fil 128 entre le boîtier avant 32 et un bloc de commutation 130 situé à proximité d'une des poignées du guidon 116. L'interface 126 est dotée d'une fiche à plusieurs éléments conducteurs 132 qui se connecte à une prise 134 (représentée en pointillés) sur le bord latéral 32b du boîtier avant lorsqu'on fixe celui-ci sur le socle 114. L'interface 126 permet de relayer les commandes du bloc de commutation 130 vers le boîtier arrière 34 par le câblage électrique 112.

On notera que la mise en place du boîtier avant 32 sur son socle 114 et la réalisation de la connexion entre la prise 134 et la fiche 132 de l'interface s'effectuent par un même mouvement, ce qui améliore l'ergonomie.

Le bloc de commutation 130 comprend une commande 136 de clignotants pour la signalisation de l'intention de changer de direction, et un bouton 138 pour activer un avertisseur sonore.

Dans ce mode de réalisation, l'interface 126 est également câblée (fil 128a) à une dynamo (non représentée) permettant de recharger la batterie. On notera que l'on peut également connecter la batterie à toute sorte de générateur d'énergie électrique associé au mouvement de la roue avant ou arrière, ou encore du pédalier, par connexion électrique sur l'un ou l'autre des boîtiers.

On peut également envisager des moyens de recharge de la batterie basés sur des capteurs solaires.

Dans ce mode de réalisation, le boîtier avant 32 ne comporte pas de source d'énergie interne. Il est alimenté via le câblage électrique 112 par une source d'énergie telle qu'une batterie rechargeable, logée dans le boîtier arrière 34. Cette disposition permet de dégager le volume nécessaire au boîtier avant 32 d'une part pour loger les moyens de contrôle et d'affichage 122 et d'autre part pour assurer des dimensions suffisamment réduites pour permettre le passage du boîtier avant 32 entre les rayons d'une roue de bicyclette lors de la mise en configuration de verrouillage.

La prise 134 du boîtier avant est également apte à recevoir une fiche de sortie 140 d'une alimentation externe 142 à branchement sur secteur, permettant de recharger la batterie du boîtier arrière 34 via le câblage électrique 112 (figure 16). Cette disposition permet d'utiliser avantageusement la liaison entre les deux boîtiers en tant que câble d'extension, et donc de laisser le boîtier arrière 34 en position sur la bicyclette durant l'opération de recharge de la batterie. Elle permet en outre de prévoir l'utilisation d'une batterie fixe ou difficilement accessible dans le boîtier arrière 34 et ainsi d'offrir une meilleure protection contre le vol de celle-ci.

Comme le montre la figure 14, les sources lumineuses du boîtier arrière 34 sont constituées par un motif de diodes électroluminescentes 98 derrière la fenêtre de sortie 34a. Ce motif permet en outre d'obtenir une configuration lumineuse sous forme de flèches 144 dirigées vers la gauche ou vers la droite pour produire les clignotants selon les commandes reçues depuis le dispositif de commutation 138 via le câblage 112.

Dans l'exemple, le boîtier arrière 34 comporte également des flèches dépassantes 146 orientées respectivement vers la droite et la gauche et comportant des diodes électroluminescentes 148 pour indiquer les changements de direction selon les commandes reçues depuis le dispositif de commutation 138. Ces diodes électroluminescentes 148 peuvent être de couleur orange, plus appropriée à cette fonction.

Le boîtier arrière 34 se fixe sur un socle 150 monté sur l'une des fourches arrières 1a de la bicyclette 1, comme représenté aux figures 17 et 18. Ce socle 150 comporte une paire de broches 152, équipées d'éléments de coincement 152a, ayant une configuration sensiblement identique aux broches 44 du boîtier avant 32, et destinées à se loger dans les trous 50 du boîtier arrière 34.

Des moyens de détection d'effraction associés à une alarme sonore ou lumineuse (utilisant par exemple les diodes électroluminescentes de signalisation 98) peuvent être incorporés dans l'un ou l'autre des boîtiers. Ces moyens peuvent être réalisés selon des techniques connues de manière à se déclencher en réponse à un mouvement ou une force subi par les boîtiers, ou à un sectionnement du câblage électrique 112. Cette alarme peut être notamment basée sur une jauge de contrainte montée dans l'un des boîtiers de façon à détecter un effort sur les moyens de verrouillage au-delà d'un seuil prédéterminé. L'alarme sonore peut être réalisée à partir de l'avertisseur sonore, mais commandée de façon à émettre un son plus fort et plus percutant.

Les moyens de détection d'effraction sont mis en veille lorsque le bouton pressoir 124a du boîtier avant est en position enfoncée, ce qui est le cas lorsque les deux boîtiers sont verrouillés ensemble.

Il est possible de prévoir en outre une commande à distance des moyens de détection d'effractions, fonctionnant par exemple par une liaison haute fréquence ou infrarouge.

La figure 19 est un schéma bloc permettant de comprendre l'organisation des éléments électriques et électroniques du dispositif selon le deuxième mode de réalisation.

Le boîtier arrière 34 comprend un circuit 154 de contrôle de charge de la batterie 164, à un circuit 156 de commande des clignotants, et un circuit 158 de commande des diodes de signalisation 98 avant et arrière (lumières), tous reliés fonctionnellement aux boutons commutateurs 124 du boîtier avant 32 et/ou son interface 114 par le câblage électrique 112.

Les moyens de détection d'effraction 160 ainsi que l'alarme sonore 162 sont connectés directement à la batterie 164 de manière à rester opérants même lorsque le câblage 112 est sectionné.

Afin de limiter le nombre de fils constituant le câblage électrique, il est possible d'envisager de relier la liaison mécanique, constituée par le câble 36, au terminal de la source d'énergie qui constitue le terminal commun de l'ensemble des circuits du dispositif. De même, il est également possible de relier ce terminal commun au cadre de la bicyclette pour permettre des connexions électriques au terminal commun directement à partir du cadre de la bicyclette.

Il sera maintenant décrit un troisième mode de réalisation du dispositif de signalisation conformément à la présente invention.

Dans ce mode de réalisation, le boîtier de signalisation lumineuse avant 32 intègre les mêmes fonctions que celui du deuxième mode de réalisation et celles-ci ne seront pas décrites par souci de concision.

Comme le montre la figure 20, le moyen de jonction du boîtier avant 32 comprend une lame 44 qui s'étend sous le plan inférieur du boîtier 32 et dépasse légèrement le bord antérieur de ce dernier. Cette lame 44 permet également de monter le boîtier avant 32 sur un socle 114 sur le guidon 116 (figures 21 et 22). Dans ce cas, la lame 44 s'engage dans une fente 166 prévue dans le socle 114 dans le sens de l'axe avant-arrière de la bicyclette 1.

Le câble 36 formant la liaison mécanique entre les boîtiers 32 et 34 peut être solidarisé directement sur la lame 44 pour une sûreté accrue. Le câble 36 et le câblage électrique 112 arrivent sur le boîtier avant 32 au niveau de sa face arrière, à un angle légèrement oblique.

Une interface électrique 126, équivalente à celle du deuxième mode de réalisation, est prévue sur un côté du socle 114 et permet une jonction avec un connecteur 134 complémentaire du boîtier avant 32 lorsque ce dernier est emmanché dans le socle 114. L'interface 126 est reliée à un dispositif de commutation pour la commande des clignotants et de l'avertisseur sonore (non représenté), identique à celui du deuxième mode de réalisation. Le connecteur 134 peut être également connecté à une source de courant d'une alimentation externe pour recharger la batterie contenue dans le boîtier arrière 34.

Comme le montre la figure 23, le boîtier de signalisation lumineuse arrière comporte, sous sa fenêtre de sortie 34a, une fente 168 formant un moyen de jonction et de verrouillage adapté à recevoir la lame 44 du boîtier avant, de manière analogue au dispositif selon le premier mode de réalisation. Dans l'exemple, le verrouillage est réalisé par encliquetage au moyen d'une serrure à combinaison 110.

On notera que dans ce mode de réalisation, les fenêtres de sortie 32a, 34a des boîtiers avant et arrière sont face-à-face lorsque le dispositif est en configuration de verrouillage. De la sorte, ces éléments, qui peuvent constituer un point faible du dispositif, sont protégés. Des butées ou des coussinets 170 peuvent être prévus autour de l'une des fenêtres 34a pour éviter que celles-ci s'entrechoquent lors de la mise en configuration de verrouillage.

La partie du boîtier arrière 34 au-dessous de la fente 166 comprend la serrure 110 et la batterie (non-représentée). Sur cette partie sont également fixées les flèches de clignotants 146, 148 comme dans le deuxième mode de réalisation.

Le dos du boîtier comprend une platine 172 sur laquelle sont prévus des moyens 172a de fixation sur un socle 150 attaché à l'une des fourches arrières 1a de la bicyclette.

Etant donné qu'il est seulement nécessaire que l'un des boîtiers (dans l'exemple, le boîtier avant) soit capable de passer à travers les rayons d'une roue (normalement la roue arrière) pour protéger celle-ci, le boîtier arrière peut être maintenu sur son socle lorsque le dispositif est en position de verrouillage. La connexion entre le boîtier arrière 34 et le socle 150 peut ainsi être réalisée sans faire appel à des moyens de déblocage rapide mais en utilisant par exemple des vis. Dans ce troisième mode de réalisation, le bouton pressoir 124a permettant l'inhibition des fonctions du dispositif se situe au niveau du boîtier arrière 34 et est placé sur une surface de contact avec le boîtier avant lorsque le dispositif est en configuration de verrouillage.

Un grand nombre de variantes du dispositif sont envisageables sans sortir du cadre de l'invention. Ces variantes peuvent concerner la nature et les matériaux constituant la liaison mécanique (câble, ruban, chaîne, tresse en fibre de carbone...), la taille de cette liaison, le système de verrouillage (à clef, à combinaison, électronique électromagnétique...), les moyens d'éclairage ou de signalisation lumineuse (ampoules, diodes...) ou les moyens de fixation des boîtiers sur le deux-roues (bague élastique avec ou sans socle, moyens utilisant des bandes "velcro" ou des sangles, systèmes de crochets...).

On notera en particulier que l'invention permet de mettre en oeuvre un grand nombre de types de moyens de jonction, lesquels peuvent être basés soit sur des systèmes d'encliquetage, soit sur de simples connexions du type mâle-femelle ou autres dispositifs de préhension.

La fonction de verrouillage peut aussi être réalisée à partir de toutes sortes de barillets actionnables par une clef. Par exemple, dans le cas du premier mode de réalisation, le barillet sera agencé de façon à pouvoir bloquer la translation de la plaque coulissante.

Dans d'autres variantes envisageables de l'invention, le dispositif peut comprendre un boîtier unique assurant seulement la signalisation arrière ou avant. Ce boîtier peut être alors solidarisé à une liaison mécanique incorporant des moyens de verrouillage capable de protéger à la fois le véhicule et la source lumineuse. Le boîtier peut également présenter deux fenêtres sur des face opposées associées respectivement à des sources de signalisation lumineuse avant et arrière.

Selon un autre mode de réalisation, le boîtier arrière de l'exemple décrit peut ne comprendre que des moyens de signalisation passifs, c'est-à-dire un réflecteur seulement.

Bien entendu, l'homme du métier tiendra compte des normes et législations en vigueur pour l'éclairage des véhicules tels que les deux-roues en considérant ces variantes.

On notera enfin qu'il est tout à fait envisageable de transposer des enseignements d'un mode de réalisation de la description à un autre, tant au niveau des moyens mécaniques qu'au niveau des fonctions offertes.

Par exemple, les boîtiers avant et arrière selon les deuxième et troisième modes de réalisation peuvent être équipées chacun d'une source d'énergie respective. Dans cette variante, le câblage électrique outre assurer les liaisons de commande, servir à interconnecter les sources d'énergie pour un meilleur équilibre des charges et une plus grande fiabilité.

Dans encore une autre variante de l'invention, la source d'énergie électrique est logée dans un boîtier séparé des boîtiers avant et arrière comportant les moyens de signalisation lumineuse. Par exemple, ce boîtier peut être attaché à la liaison mécanique et relié aux boîtiers avant et arrière grâce au câblage électrique. Pour une meilleure stabilité, le boîtier contenant la source d'énergie électrique sera associé à un moyen de support fixé au cadre. Il peut notamment avoir une configuration et un support analogues à ceux utilisés de manière classique pour transporter un ou deux bidons de boisson.

## Revendications

1. Dispositif d'éclairage ou de signalisation lumineuse (30) destiné à équiper un véhicule (1), notamment un deux-roues, comprenant des moyens de sûreté (36, 44-96 ; 110) verrouillables au véhicule, et solidaires de moyens d'éclairage ou de signalisation lumineuse (32, 34), caractérisé en ce qu'il comprend une source de signalisation lumineuse avant et une source de signalisation lumineuse arrière, les moyens de sûreté (36, 44-96 ; 110) permettant en outre de réaliser une fonction anti-vol pour ledit véhicule en comprenant une liaison mécanique (36) entre lesdites sources de signalisation lumineuse avant et arrière et des moyens de jonction (42-70) et de verrouillage (72-96 ; 110) desdites sources de signalisation lumineuse l'une avec l'autre.

2. Dispositif selon la revendication 1, caractérisé en ce que les moyens de sûreté (36, 44-96 ; 110) comprennent un élément (36) de forme allongée pouvant former une boucle verrouillable autour d'au moins une partie du véhicule.

3. Dispositif selon la revendication 1 ou 2, caractérisé en ce que les moyens d'éclairage ou de signalisation lumineuse avant et arrière (32, 34) sont logés dans des boîtiers respectifs à chaque extrémité de la liaison mécanique (36).

4. Dispositif selon l'une des revendications 1 à 3, caractérisé en ce que la liaison mécanique est sous forme de câble (36) préformé de façon à adopter naturellement une configuration en spirale.

5. Dispositif selon la revendication 3 ou la revendication 4, caractérisé en ce que les boîtiers avant et arrière (32, 34) présentent chacun une face dotée d'une fenêtre de sortie (32a, 34a) pour la source de signalisation lumineuse et deux extrémités opposées, l'une (32', 34') solidaire à une extrémité de la liaison mécanique et l'autre intégrant les moyens de jonction (42-70) des boîtiers l'un avec l'autre.

6. Dispositif selon la revendication 3 ou la revendication 4, caractérisé en ce que pour chacun des deux boîtiers (32, 34) la fenêtre de sortie (32a ou 34a) pour la source de signalisation lumineuse de l'un des boîtiers est protégée par l'autre boîtier lorsque le dispositif est en configuration de verrouillage.

7. Dispositif selon l'une quelconque des revendications 1 à 6, caractérisé en ce que les moyens de jonctions (42-70) comprennent au moins un élément mâle (44) et une prise femelle (46) complémentaires associés respectivement aux moyens d'éclairage ou de signalisation lumineuse avant et arrière (32, 34), et en ce que le dispositif comprend en outre des socles de fixation des moyens d'éclairage ou de signalisation lumineuse respectifs sur le véhicule permettant la fixation de ces derniers en configuration de signalisation lumineuse respectivement par l'élément mâle et la prise femelle.

8. Dispositif d'éclairage selon l'une quelconque des revendications 1 à 7, caractérisé en ce qu'il comprend en outre un câblage électrique (112) associé avec la liaison mécanique (36) et reliant les moyens d'éclairage ou de signalisation lumineuse avant et arrière (32, 34) entre eux.

9. Dispositif selon la revendication 8, caractérisé en ce qu'il comprend une seule source d'énergie logée dans un premier des moyens d'éclairage ou de signalisation lumineuse avant et arrière, de préférence le moyen d'éclairage ou de signalisation lumineuse arrière (34), l'alimentation du second des moyens d'éclairage ou de signalisation lumineuse (32) étant assurée par le câblage électrique (112).

10. Dispositif selon la revendication 9, caractérisé en ce que le second des moyens d'éclairage ou de signalisation lumineuse (32) comprend des moyens de connexion (134) à une source extérieure de courant électrique (142) permettant de recharger la source d'énergie électrique du premier des moyens d'éclairage ou de signalisation lumineuse (34) via le câblage électrique (112).

11. Dispositif selon l'une quelconque des revendications 8 à 10, caractérisé en ce qu'il comprend en outre des moyens de signalisation d'intention de changement de direction (144, 146) activés par un commutateur (136) à l'avant du véhicule et reliés au moyen d'éclairage ou de signalisation lumineuse arrière (34) par le câblage électrique (112).

12. Dispositif selon la revendication 11, caractérisé en ce que ledit commutateur (136) est câblé à un dispositif d'interface (126, 132) qui se connecte électriquement avec le moyen d'éclairage ou de signalisation lumineuse avant (32) lorsque celui-ci est monté en position de signalisation lumineuse.

13. Dispositif selon l'une quelconque des revendications 3 à 12, caractérisé en ce que le boîtier avant (32) comprend des moyens (122) pour déterminer et afficher des informations concernant le déplacement du véhicule (1).

14. Dispositif selon l'une quelconque des revendications 1 à 13, caractérisé en ce qu'il comprend en outre des moyens de commutation (124a) permettant d'inhiber au moins la signalisation lumineuse lorsque le dispositif est en configuration de verrouillage.

15. Dispositif selon l'une quelconque des revendications 1 à 14, caractérisé en ce qu'il comprend en outre une alarme d'effraction (160, 162) adaptée pour se déclencher en réponse à l'une ou plusieurs des conditions suivantes : mouvement ou force subis par le dispositif et rupture des moyens de sûreté (36, 44-96 ; 114).

16. Dispositif selon l'une quelconque des revendications 1 à 15, caractérisé en ce qu'il comprend en outre un avertisseur sonore (162).

17. Dispositif selon l'une quelconque des revendications 1 à 16, caractérisé en ce qu'il comprend en outre des moyens de conversion d'énergie associés à la roue avant ou arrière ou au pédalier du véhicule, permettant de recharger la source d'énergie électrique.

18. Dispositif selon l'une quelconque des revendications 1 à 17, caractérisé en ce qu'il forme un ensemble amovible vis-à-vis du véhicule.

## Claims

1. Light signaling of lighting device (30) for fitting to a vehicle (1), in particular a two-wheeled vehicle, comprising security means (36, 44-96; 110) lockable to the vehicle, and integral with lighting or light signaling means (32, 34), characterized in that it comprises a front signaling light source and a rear signaling light source, the security means (33, 44-96; 110) further providing an anti-theft function for said vehicle by including a mechanical link (36) between said front and rear signaling light sources, and means (42-70) for joining and locking (72-96; 110) said signaling light sources together.

2. Device according to claim 1, characterized in that the security means (36, 44-96; 110) comprise an elongate element (36) which can form a loop which is lockable around at least a portion of the vehicle.

3. Device according to claim 1 or claim 2, characterized in that the front and rear lighting or light signaling means (32, 34) are housed in respective housings at each end of the mechanical link (36).

4. Device according to any one of claims 1 to 3, characterized in that the mechanical link is in the form of a wiring (36) which is pre-formed so as to adopt a spiral configuration naturally.

5. Device according to claim 3 or claim 4, characterized in that each of the front and rear housings (32, 34) has a face provided with an exit window (32a, 34a) for the signaling light source and two opposite ends, one (32', 34') being integral with one end of the mechanical link and the other incorporating the means (42-70) for joining the housings together.

6. Device according to claim 3 or claim 4, characterized in that for each of the two housings (32, 34), the exit window (32a or 34a) for the signaling light source of one of the housings is protected by the other housing when the device is in a locked configuration.

7. Device according to any one of claims 1 to 6, characterized in that the joining means (42-70) comprise at least one male element (44) and a female element (46) which are complementary and associated respectively with the front and rear lighting or signaling means (32, 34), and in that the device further comprises brackets for fixing the respective lighting or light signaling means to the vehicle to fix the latter in a light signaling configuration respectively by the male and female elements.

8. Lighting device according to any one of claims 1 to 7, characterized in that it further comprises electrical wiring (112) associated with the mechanical link (36) and connecting the front and rear lighting or light signaling means (32,34) together.

9. Device according to claim 8, characterized in that it comprises a single energy source housed in a first one of the front and rear lighting or light signaling means, preferably the rear lighting or light signaling means (34), power supply to the second of the lighting or light signaling means (32) being provided by the electrical wiring (112).

10. Device according to claim 9, characterized in that the second of the lighting or light signaling means (32) comprises means (134) for link to an external electrical current source (142) enabling the electrical energy source of the first of the lighting or light signaling means (34) to be recharged via the electrical wiring (112).

11. Device according to any one of claims 8 to 10, characterized in that it further comprises turn indicator signaling means (144, 146) activated by a switch (136) at the front of the vehicle, and connected to the rear lighting or light signaling means (34) via the electrical wiring (112).

12. Device according to claim 11, characterized in that said switch (136) is wired to an interface device (126, 132) which electrically connects with the front lighting or light signaling means (32) when the latter is mounted in a light signaling position.

13. Device according to any one of claims 3 to 12, characterized in that the front housing (32) comprises means (122) for determining and displaying information concerning the displacement of the vehicle (1).

14. Device according to any one of claims 1 to 13, characterized in that it further comprises switch means (124a) for inhibiting at least the light signaling when the device is in a locked configuration.

15. Device according to any one of claims 1 to 14, characterized in that it further comprises an intruder alarm (160, 162) adapted to be triggered in response to one or more of the following conditions: movement or force exerted on the device and breaking of the security means (36, 44-96; 114).

16. Device according to any one of claims 1 to 15, characterized in that it further comprises a hooter (162).

17. Device according to any one of claims 1 to 16, characterized in that it further comprises energy conversion means associated with the front or rear wheel or a pedal bracket of the vehicle, allowing the energy source to be recharged.

18. Device according to any one of claims 1 to 17, characterized in that it forms an assembly which is removable with respect to the vehicle.

## Patentansprüche

1. Vorrichtung zur Beleuchtung oder Leuchtsignalgebung (30), wobei diese Vorrichtung zum Ausrüsten eines Fahrzeugs (1), insbesondere eines Zweirad-Fahrzeugs, bestimmt ist und eine Sicherheitseinrichtung (36, 44-96; 110) aufweist, welche an dem Fahrzeug verriegelbar und mit Mitteln zur Beleuchtung oder Leuchtsignalgebung einstückig verbunden ist, dadurch gekennzeichnet, daß die Vorrichtung eine vordere Quelle zur Leuchtsignalgebung und eine hintere Quelle zur Leuchtsignalgebung aufweist, wobei die Sicherheitseinrichtung (36, 44-96; 110) außerdem die Verwirklichung einer Diebstahlsicherungsfunktion für das Fahrzeug dadurch erlaubt, daß die Sicherheitseinrichtung eine mechanische Verbindung (36) zwischen der vorderen Quelle zur Leuchtsignalgebung und der hinteren Quelle zur Leuchtsignalgebung und eine Einrichtung zur Verbindung (42-70) und eine Einrichtung zur Verriegelung (72-96; 110) der Quellen zur Leuchtsignalgebung miteinander aufweist.

2. Vorrichtung nach Anspruch 1, dadurch gekennzeichnet, daß die Sicherheitseinrichtung (36, 44-96; 110) ein Element (36) von langgestreckter Gestalt aufweist, das eine um zumindest einen Teil des Fahrzeugs herum verriegelbare Schleife bilden kann.

3. Vorrichtung nach Anspruch 1 oder 2, dadurch gekennzeichnet, daß die vordere Einrichtung zur Beleuchtung oder Leuchtsignalgebung und die hintere Einrichtung zur Beleuchtung oder Leuchtsignalgebung in einem jeweiligen Gehäuse an jedem Ende der mechanischen Verbindung (36) untergebracht sind.

4. Vorrichtung nach einem der Ansprüche 1 bis 3, dadurch gekennzeichnet, daß die mechanische Verbindung in Gestalt eines Kabels (36) vorliegt, welches in der Art vorgeformt ist, um in natürlicher Weise eine Spiralgestalt anzunehmen.

5. Vorrichtung nach Anspruch 3 oder Anspruch 4, dadurch gekennzeichnet, daß das vordere Gehäuse (32) und das hintere Gehäuse (34) jeweils eine Seite, die mit einem Austrittsfenster (32a, 34a) für die Quelle zur Leuchtsignalgebung versehen ist, und zwei einander entgegengesetzte Enden aufweisen, von denen das eine (32', 34') mit einem Ende der mechanischen Verbindung einstückig verbunden ist und das andere die Einrichtung zur Verbindung (42-70) der Gehäuse miteinander enthält.

6. Vorrichtung nach Anspruch 3 oder Anspruch 4, dadurch gekennzeichnet, daß für jedes der zwei Gehäuse (32, 34) das Austrittsfenster (32a oder 34a) für die Quelle zur Leuchtsignalgebung des einen der Gehäuse durch das andere Gehäuse geschützt ist, wenn die Vorrichtung in Gestalt der Verriegelung ist.

7. Vorrichtung nach einem der Ansprüche 1 bis 6, dadurch gekennzeichnet, daß die Einrichtung zur Verbindung (42-70) wenigstens ein männliches Element (44) und ein weibliches Aufnahmeteil (46) aufweist, wobei das männliche Element und das weibliche Aufnahmeteil komplementär sind und jeweils eines von beiden mit der vorderen Einrichtung zur Beleuchtung oder Leuchtsignalgebung (32) bzw. der hinteren Einrichtung zur Beleuchtung oder Leuchtsignalgebung (34) verbunden ist, und daß die Vorrichtung darüberhinaus Befestigungssockel der jeweiligen Einrichtung zur Beleuchtung oder Leuchtsignalgebung an dem Fahrzeug aufweist, um die Befestigung der jeweiligen Einrichtung in Gestalt der Leuchtsignalgebung durch das männliche Element bzw. das weibliche Aufnahmeteil zu erlauben.

8. Vorrichtung zur Beleuchtung nach einem der Ansprüche 1 bis 7, dadurch gekennzeichnet, daß sie darüberhinaus eine elektrische Verkabelung (112) aufweist, welche mit der mechanischen Verbindung (36) verbunden ist und die vordere Einrichtung zur Beleuchtung oder Leuchtsignalgebung (32) und die hintere Einrichtung zur Beleuchtung oder Leuchtsignalgebung (34) miteinander verbindet.

9. Vorrichtung nach Anspruch 8, dadurch gekennzeichnet, daß sie eine einzige Energiequelle aufweist, die in einer ersten der Einrichtungen, nämlich der vorderen Einrichtung zur Beleuchtung oder Leuchtsignalgebung und der hinteren Einrichtung zur Beleuchtung oder Leuchtsignalgebung, vorzugsweise in der hinteren Einrichtung zur Beleuchtung oder Leuchtsignalgebung (34) untergebracht ist, wobei die Versorgung der zweiten der Einrichtungen zur Beleuchtung oder Leuchtsignalgebung (32) durch die elektrische Verkabelung (112) gewährleistet ist.

10. Vorrichtung nach Anspruch 9, dadurch gekennzeichnet, daß die zweite der Einrichtungen zur Beleuchtung oder Leuchtsignalgebung (32) eine Anschlußeinrichtung (134) zum Anschließen an eine äußere Quelle elektrischen Stroms (142) aufweist, um eine Wiederaufladung der elektrischen Energiequelle der ersten der Einrichtungen zur Beleuchtung oder Leuchtsignalgebung (34) mittels der elektrischen Verkabelung (112) zu erlauben.

11. Vorrichtung nach einem der Ansprüche 8 bis 10, dadurch gekennzeichnet, daß sie darüberhinaus eine Einrichtung zur Signalisierung der Absicht der Richtungsänderung (144, 146) aufweist, wobei diese Einrichtung durch einen Schalter (136) an dem Vorderteil des Fahrzeugs aktiviert wird und mit der hinteren Einrichtung zur Beleuchtung oder Leuchtsignalgebung (34) durch die elektrische Verkabelung (112) verbunden ist.

12. Vorrichtung nach Anspruch 11, dadurch gekennzeichnet, daß der Schalter (136) mit einer Interface-Einrichtung (126, 132) verkabelt ist, welche sich mit der vorderen Einrichtung zur Beleuchtung oder Leuchtsignalgebung (32) elektrisch verbinden läßt, wenn diese Einrichtung in der Position der Leuchtsignalgebung angebracht ist.

13. Vorrichtung nach einem der Ansprüche 3 bis 12, dadurch gekennzeichnet, daß das vordere Gehäuse (32) eine Einrichtung (122) zum Bestimmen und zum Anzeigen von Informationen bezüglich der Verlagerung des Fahrzeugs (1) aufweist.

14. Vorrichtung nach einem der Ansprüche 1 bis 13, dadurch gekennzeichnet, daß sie darüberhinaus eine Einrichtung zur Umschaltung (124a) aufweist, wobei diese Einrichtung ein Hemmen wenigstens der Leuchtsignalgebung erlaubt, wenn die Vorrichtung in Gestalt der Verriegelung ist.

15. Vorrichtung nach einem der Ansprüche 1 bis 14, dadurch gekennzeichnet, daß sie darüberhinaus eine Diebstahlalarmeinrichtung (160, 162) aufweist, welche ausgelegt ist, um sich in Reaktion auf eine oder mehrere der folgenden Bedingungen auszulösen: Bewegung oder Kraft, welchen die Vorrichtung unterworfen wird, und Zubruchgehen der Sicherheitseinrichtung (36, 44-96; 114).

16. Vorrichtung nach einem der Ansprüche 1 bis 15, dadurch gekennzeichnet, daß sie darüberhinaus einen akustischen Alarmgeber (162) aufweist.

17. Vorrichtung nach einem der Ansprüche 1 bis 16, dadurch gekennzeichnet, daß sie darüberhinaus eine Einrichtung zur Umwandlung von Energie aufweist, wobei diese Einrichtung mit dem Vorderrad oder dem Hinterrad oder der Tretkurbel des Fahrzeugs verbunden ist, um eine Wiederaufladung der elektrischen Energiequelle zu erlauben.

18. Vorrichtung nach einem der Ansprüche 1 bis 17, dadurch gekennzeichnet, daß sie eine bezüglich des Fahrzeugs abnehmbare Anordnung bildet.
